# EUROPÄISCHE PATENTSCHRIFT

(11) **EP 1 235 130 B1**
(45) Veröffentlichungstag und Bekanntmachung des Hinweises auf die Patenterteilung: **11.10.2006**
(21) Anmeldenummer: 01130806.1
(22) Anmeldetag: 24.12.2001
(51) Int. Cl.: G05D 23/19

(54) **Verfahren und Vorrichtung zur Regelung der Raumtemperatur**
Method and device for controlling the room temperature
Procédé et dispositif pour réguler la température d'une pièce

(30) Priorität: 23.02.2001 DE 10108847
(43) Veröffentlichungstag der Anmeldung: 28.08.2002
(73) Patentinhaber: Techem Energy Services GmbH, 65760 Eschborn (DE)
(72) Erfinder: Ohl, Jochen, Dr., 64823 Gross-Umstadt (DE)
(74) Vertreter: KEIL & SCHAAFHAUSEN Patentanwälte

(56) Entgegenhaltungen:
- DE-A- 3 136 520
- DE-A- 3 345 511
- DE-A- 3 423 731
- DE-A- 19 749 623
- DE-C- 3 306 574
- DE-C- 4 022 935
- GB-A- 2 320 966

## Beschreibung

Die Erfindung betrifft ein Verfahren zur Regelung der Raumlufttemperatur (Raumtemperatur) und eine Vorrichtung zur Durchführung dieses Verfahrens.

Zur Erhöhung des Wohnkomforts wird die Raumtemperatur schon seit einiger Zeit unter Nutzung von Regeleinrichtungen automatisch auf den vom Nutzer eingestellten Sollwert geregelt. Als Basis der Regelung dient im Allgemeinen die aktuelle Raumtemperatur, die über entsprechende Temperaturfühler gemessen und als Ist-Wert in den Regler eingespeist wird.

Bei herkömmlichen Raumtemperaturreglern, die bspw. als Heizkörperthermostat oder als elektronischer Heizkörperregler ausgeführt sind, wird die Erfassung der Raumtemperatur jedoch durch zwei Einflussfaktoren wesentlich verfälscht: den Heizmediumtemperatureinfluss und den Strahlungseinfluss vom Heizkörper. Beide Effekte überlagern sich und führen dazu, dass der Regler eine um bis zu etwa 2K höhere Temperatur erfasst als die tatsächlich in der Raummitte herrschende Raumtemperatur. Während der erste Einflussfaktor neben der Bauart des Raumtemperaturreglers im Wesentlichen von der Vorlauftemperatur des Heizmediums abhängt und im Labor ermittelt werden kann, wird der zweite Einflussfaktor zusätzlich durch die Bauart des Heizkörpers sowie die konkrete Einbausituation des Reglers mitbestimmt. So kann sich in einer Nische der Hauswand, in der Heizkörper häufig angeordnet werden, ein Wärmestau bilden, der die vom Regler erfasste Temperatur erhöht. Ferner hat sich gezeigt, dass eine Fenster-Offen-Erkennung zum selbsttätigen Schließen der Heizkörperventile bei Feststellung eines plötzlichen starken Temperaturabfalls während einer Fensterlüftung bei höherer Vorlauftemperatur schlechter funktioniert. Der Grund liegt in der am Heizkörper aufgrund der höheren Temperatur durch Konvektion stärker aufsteigenden Warmluft, die die einfallende Kaltluft mit nach oben transportiert. Mit zunehmendem Warmluftstrom fällt daher weniger Kaltluft nach unten und strömt an dem Heizkörperregler mit dem Temperaturfühler vorbei. Bei den bekannten Raumtemperaturreglern ist eine effektive Korrektur der o.g. Einflussfaktoren nicht möglich.

Aus der DE 197 28 803 C1 ist ein Temperaturmessgerät mit einem Haupttemperaturfühler zur Messung der Temperatur außerhalb des Messgerätgehäuses und einem zwischen Wärmequellen innerhalb des Messgerätgehäuses und dem Haupttemperaturfühler angeordneten Hilfstemperaturfühlers bekannt, mit dem der Einfluss des Wärmestroms von internen Wärmequellen mittels einer Rechenvorschrift korrigiert werden soll. Durch die Korrektur werden jedoch keine lokalen äußeren Störungsfaktoren, wie der Einfluss der Heizmediumtemperatur oder der Strahlungseinfluss eines Heizkörpers erfasst, da beide Temperaturfühler den Störungseinflüssen gleichermaßen ausgesetzt sind.

In der DE 197 49 623 A1 wird ein Gerät zur Steuerung eines Heizkörpers und zur Heizkostenerfassung beschrieben, welches insgesamt drei Temperatursensoren zur Messung der den Heizkörper umgebenden Luft und zur Messung der in den Heizkörper und aus dem Heizkörper strömenden Flüssigkeit aufweist. In einem zugeordneten Mikroprozessor werden aus den drei Temperaturwerten der Energieverbrauch des Heizkörpers berechnet und die Flüssigkeitsströmung in den Heizkörper gesteuert.

Aufgabe der vorliegenden Erfindung ist es, die Regelgüte von Heizkörperreglern zu verbessern.

Diese Aufgabe wird mit der Erfindung im Wesentlichen dadurch gelöst, dass ein erster Temperaturfühler einen lokalen Wert für die Raumlufttemperatur erfasst, ein zweiter Temperaturfühler die Vorlauftemperatur des Heizmediums an einem Heizkörper erfasst und die Raumtemperatur mittels eines Korrekturalgorithmus aus den von den beiden Temperaturfühlern gemessenen Temperaturmesswerten bestimmt wird. Damit liegen zwei unterschiedliche Temperaturmesswerte vor: zum einen die auch herkömmlich bereits gemessene lokale Raumlufttemperatur an der Stelle des Temperaturfühlers, die jedoch durch die oben genannten Einflussfaktoren verfälscht ist, und zum anderen die Vorlauftemperatur des Heizmediums, durch die die Verfälschung im Wesentlichen hervorgerufen wird. Durch den Einsatz eines auf diese Zweifühler-Temperaturmessung abgestimmten Korrektur- und Regelalgorithmus kann der Einfluss der Heizmediumtemperatur und der Strahlungswärme des Heizkörpers auf die ermittelte Raumtemperatur daher wirksam reduziert werden. Der Einfluss der Vorlauftemperatur kann dabei durch Labormessungen für die einzelnen Heizkörpertypen gut bestimmt werden. Hierbei ist der Heizmedieneinfluss durch Wärmeleitung im Wesentlichen unabhängig vom Heizungstyp, während der Strahlungseinfluss stark vom Heizkörpertyp abhängt.

Bei einem einfach anwendbaren Korrekturverfahren werden aus dem Temperaturmesswert für die Vorlauftemperatur erfindungsgemäß eine erste Korrekturgröße zur Berücksichtigung des Heizmediumtemperatureinflusses und eine zweite Korrekturgröße zur Berücksichtigung des Strahlungseinflusses des Heizkörpers ermittelt, wobei die Raumtemperatur anschließend mit Hilfe des Korrekturalgorithmus aus mindestens einem Temperaturmesswert für die Raumlufttemperatur und der ersten und zweiten Korrekturgröße bestimmt wird.

Dazu kann die erste und/oder die zweite Korrekturgröße für eine bestimmte Vorlauftemperatur jeweils aus diskreten Einträgen einer Wertetabelle ermittelt werden, die im Vorfeld bspw. in Laborversuchen für verschiedene realistische Vorlauftemperaturen bestimmt wurden. Dabei wird jeweils die Korrekturgröße ausgewählt, die für die der tatsächlichen Vorlauftemperatur am nächsten kommende Vorlauftemperatur ermittelt wurde.

Um eine bessere Annäherung an die tatsächliche Vorlauftemperatur zu erreichen, wird erfindungsgemäß außerdem vorgeschlagen, dass eine Korrekturgröße aus mehreren Einträgen der Wertetabelle, insbesondere für benachbarte Vorlauftemperaturen, gemittelt wird. Hierfür können herkömmliche Interpolationsverfahren verwendet werden, wie sie bspw. unter den Bezeichnungen "nearest neighbour"-, bilineare, bikubische oder "spline" -Interpolation bekannt sind.

Zusätzliche Einflüsse auf die von dem einen Temperaturfühler gemessene Raumlufttemperatur können erfindungsgemäß berücksichtigt werden, indem die jeweiligen Einträge der Wertetabelle von der Heizkörperkategorie, der Einbausituation des Heizkörpers und Reglers, dem Heizkörpertyp, dem Temperaturfühlertyp, der Temperaturfühleranordnung oder dgl. abhängen. Dadurch können unterschiedliche Strahlungscharakteristiken für verschiedene Heizkörperkategorien oder -modelle, unterschiedliche Einbausituationen der Heizkörper und Temperaturfühleranordnung im Raum oder sonstige Einflüsse in die Bestimmung der Raumtemperatur einfließen. Dazu werden die verschiedenen Einflüsse bspw. einfach kategorisiert, wobei für jede Kombination der verschiedenen Einflusskategorien eine entsprechende Wertetabelle zur Verfügung steht. Bei der Montage und Einrichtung der Vorrichtung wird dann bspw. durch Parameter die von dem Korrektur- und Regelalgorithmus auszuwählende Wertetabelle vorgegeben.

Eine weitere Möglichkeit zur Bestimmung der Korrekturgrößen liegt erfindungsgemäß darin, dass die erste und/oder die zweite Korrekturgröße jeweils mit einer von der Vorlauftemperatur des Heizmediums abhängigen Parametrisierung ermittelt werden. Da in diesem Fall eine funktionale Abhängigkeit der Korrekturgrößen von der Vorlauftemperatur gegeben ist, kann auf eine im Fall der Wertetabellen beschriebene Mittlung verzichtet werden. Eine Parametrisierung lässt sich bspw. durch einen Polynom-Fit an eine im Labor aufgenommene Messreihe erreichen. Es sind jedoch auch andere funktionale Abhängigkeiten für die Parametrisierung geeignet.

In diesem Fall lassen sich auch weitere Abhängigkeiten von der Heizkörperkategorie, der Einbausituation des Heizkörpers, dem Heizkörpertyp, dem Temperaturfühlertyp, der Temperaturfühleranordnung oder dgl. einfach durch das Einführen weiterer Parameter in die Parametrisierung berücksichtigen.

Natürlich ist auch eine Kombination der beiden vorbeschriebenen Möglichkeiten zur Ermittlung der Korrekturgrößen denkbar, indem bspw. Parametrisierungen für die weiteren Abhängigkeiten in einer Wertetabelle für verschiedene Vorlauftemperaturen zur Verfügung stehen.

Bei der Fenster-Offen-Erkennung in beheizbaren Räumen durch Auswertung des Raumtemperaturabfalls wird die zeitliche Änderung der Raumtemperatur überwacht, indem der Temperaturgradient und/oder kurzfristige Temperaturschwankungen mittels eines Algorithmus aus der in vorgegebenen zeitlichen Abständen ermittelten Raumtemperatur bestimmt werden. Die Empfindlichkeit des Algorithmus zur Fenster-Offen-Erkennung wird erfindungsgemäß mit steigender Vorlauftemperatur des Heizmediums erhöht. Dadurch werden die aufgrund der stärkeren Konvektion geringeren Veränderungen bzw. Schwankungen in der gemessenen Raumlufttemperatur bei höherer Vorlauftemperatur zuverlässig erfasst.

Erfindungsgemäß wird bei der Fenster-Offen-Erkennung ein fester Schrankenwert für den Temperaturgradienten und/oder die Temperaturschwankungen vorgegeben, dessen Über- oder Unterschreiten bspw. durch den Algorithmus festgestellt wird und eine Fensteröffnung anzeigt. Um die Abhängigkeit von der Vorlauftemperatur zu erreichen, wird der Schrankenwert mit der Vorlauftemperatur verändert. Dies kann entweder durch eine Wertetabelle oder durch eine geeignete Parametrisierung analog zu der vorbeschriebenen Bestimmung der Korrekturgrößen für die Bestimmung der Raumtemperatur erfolgen.

Zur Berücksichtigung von weiteren störenden Einflüssen wird erfindungsgemäß vorgeschlagen, dass der Schrankenwert von der Heizkörperkategorie, der Einbausituation des Heizkörpers, dem Heizkörpertyp, dem Temperaturfühlertyp, der Temperaturfühleranordnung oder dgl. abhängt.

Das erfindungsgemäße Verfahren lässt sich besonders einfach mit einer Vorrichtung durchführen, die mindestens zwei Temperaturfühler aufweist, wobei ein erster Temperaturfühler zur lokalen Messung der Raumlufttemperatur und ein zweiter, am Vorlauf eines Heizkörpers angeordneter Temperaturfühler zur Messung der Vorlauftemperatur des Heizmediums ausgebildet ist, sowie möglicherweise in die Temperaturfühler integrierte Analog-Digital-Wandler zur Digitalisierung der Temperaturmesswerte, ein Rechenwerk mit Speicher zur Speicherung der digitalisierten Temperaturmesswerte und zur Durchführung von in dem Rechenwerk implementierten Rechenvorschriften zur Ermittlung der Raumtemperatur und/oder zur Fenster-Offen-Erkennung, und einen Heizkörperregler zur Steuerung von Heizkörperventilen. Durch die Messung der Vorlauftemperatur wird somit nicht nur die Bestimmung der Raumtemperatur und die Lüftungserkennung, sondern auch die Regelgüte der Heizkörper- oder Raumtemperaturregelung verbessert.

Es ist möglich, die Temperaturfühler zur Messung der Vorlauftemperatur und/oder der lokalen Raumlufttemperatur mit in den Heizkörperregler zu integrieren, um eine besonders kompakte Anordnung zu erhalten. Die Fühler können jedoch auch als separate Temperaturfühler ausgebildet und mit der Vorrichtung verbunden sein, wobei der Temperaturfühler zur Messung der Vorlauftemperatur dann vorzugsweise an der Rohrleitung montierbar ist.

Als Rechenwerk ist ein Prozessor, insbesondere Halbleiterchip, vorgesehen, der vorzugsweise auch eine Speicherfunktion übernehmen kann.

Die Vorrichtung kann zur Übermittlung von Raumtemperaturwerten, Fenster-Offen-Kennungen oder dgl. mit einer zentralen Wohnungssteuerung verbindbar sein, die bspw. als zentrale Raumtemperatur- oder Heizungsregelung mehrere Heizkörperregler steuern und weitere Aufgaben, wie eine Heizkostenerfassung, übernehmen kann.

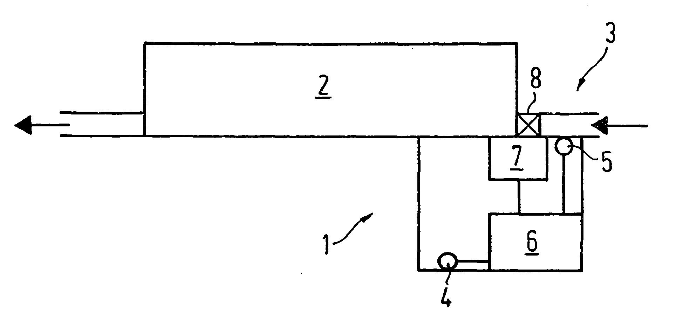

Nachfolgend wird eine bevorzugte Ausführungsform der vorliegenden Erfindung anhand der Zeichnung näher beschrieben.

Die einzige Figur zeigt schematisch eine erfindungsgemäße Vorrichtung zur Ermittlung der Raumtemperatur und zur Fenster-Offen-Erkennung.

Die Vorrichtung 1 ist an einem Heizkörper 2 im Bereich der Zulaufleitung 3 angeordnet und weist einen ersten Temperaturfühler 4 zur Messung der lokalen Raumlufttemperatur und einen zweiten Temperaturfühler 5 zur Messung der Vorlauftemperatur des Heizmediums auf. Die Temperaturfühler 4, 5 sind mit einem Rechenwerk 6 mit integriertem Speicher verbunden. In dem Rechenwerk 6 wird die Ermittlung der Raumtemperatur und ggfs. die Fenster-Offen-Erkennung durchgeführt. Ferner ist ein Heizkörperregler 7 mit dem Rechenwerk 6 verbunden. Der Heizkörperregler 7 öffnet und schließt das Heizkörperventil 8 in der Zulaufleitung 3 zur Regelung der Raumtemperatur.

Nachfolgend wird die Funktionsweise der Vorrichtung 1 erläutert. Zur Ermittlung der Raumtemperatur misst der erste Temperaturfühler 4 die Raumlufttemperatur zunächst lokal an seinem Einbauort. Dieser Temperaturwert ist sowohl durch die Strahlungswärme von dem Heizkörper 2 als auch durch die Heizmitteltemperatur verfälscht. Durch Anordnung des Temperaturfühlers in einer von dem Heizkörper 2 und der Zulaufleitung 3 entfernten Ecke der Vorrichtung 1 und entsprechende Abschirmungen kann der Einfluss der Störungen zwar minimiert werden, die Verfälschung der Raumtemperatur bezogen auf die in der Raummitte gemessene tatsächliche Raumtemperatur beträgt jedoch immer noch bis zu etwa 2K.

Zur Korrektur dieser Verfälschung misst der zweite Temperaturfühler 5 die Vorlauftemperatur des Heizmediums. Beide Temperaturmesswerte, die ggf. von den Temperaturfühlern 4, 5 bereits in digitaler Form ausgegeben werden, werden in das Rechenwerk 6 übertragen. Dort wird aus dem Temperaturmesswert für die Vorlauftemperatur eine erste Korrekturgröße zur Berücksichtigung des Heizmitteltemperatureinflusses und eine zweite Korrekturgröße zur Berücksichtigung des Strahlungseinflusses des Heizkörpers ermittelt. Dazu sind in dem Speicher des Rechenwerks 6 entweder Wertetabellen mit im Labor ermittelten Korrekturwerten zu bestimmten Vorlauftemperaturen oder die Parameter einer funktionalen Parametrisierung der Korrekturwerte als Funktion der Vorlauftemperatur gespeichert. Die Einbausituation und der Heizkörpertyp können bspw. bei der Montage angegeben werden, wobei auf verschiedene im Speicher abgelegte spezifische Einbausituationen und Heizkörpertypen zurückgegriffen werden kann. Die so ermittelten ersten und zweiten Korrekturwerte werden dann von dem Rechenwerk 6 in einem ebenfalls abgespeicherten Korrekturalgorithmus verwendet, um zusammen mit dem Temperaturmesswert für die lokale Raumlufttemperatur die tatsächliche Raumtemperatur zu ermitteln.

Durch die verbesserte Ermittlung der tatsächlichen Raumtemperatur ist eine exaktere Raumtemperaturregelung mit dem Heizkörperregler 7 möglich.

Zur Einsparung von Heizenergie weist die Vorrichtung 1 zusätzlich eine Fenster-Offen-Erkennung auf. Diese kann prinzipiell auch als eigenständige Vorrichtung ausgebildet sein. Durch die Verbindung der Temperaturmessung und der Fenster-Offen-Erkennung in einer Vorrichtung 1 zusammen mit einem Heizkörperregler wird jedoch eine besonders kompakte und günstige Ausführung erreicht, da insbesondere die Temperaturfühler 4, 5 und das Rechenwerk 6 gemeinsam für die Temperaturmessung, die Fenster-Offen-Erkennung und die Regelung verwendet werden können und nur eine Energieversorgung bspw. in Form einer Batterie notwendig ist.

Die Fenster-Offen-Erkennung dient dazu, eine Fensterlüftung zu erkennen und den Heizkörperregler 7 zum Schließen des Heizkörperventils zu veranlassen. Dazu wird die Raumtemperatur in Abhängigkeit von der Zeit von dem Rechenwerk 6 überwacht. Ein Öffnen oder Schließen des Fensters lässt sich entweder durch einen erhöhten Temperaturgradienten oder erhöhte Temperaturschwankungen nachweisen. Bei einer höheren Vorlauftemperatur werden aufgrund der stärkeren Konvektion der aufsteigenden Warmluft, die die einströmende Kaltluft mitführt, sowohl der Temperaturgradient als auch die Temperaturschwankungen kleiner. Daher wird mit steigender Vorlauftemperatur die Sensitivität der Fenster-Offen-Erkennung in dem Rechenwerk 6 erhöht, um eine zuverlässige Fenster-Offen-Erkennung zu ermöglichen. Dies kann bspw. dadurch realisiert werden, dass Schrankenwerte für den Temperaturgradienten und/oder die Temperaturschwankungen, die für eine Fenster-Offen-Meldung an den Regler herangezogen werden, mit steigender Vorlauftemperatur herabgesetzt werden.

Die Messung der Vorlauftemperatur und deren Auswertung in dem Rechenwerk 6 führt erfindungsgemäß zu einer deutlichen Verbesserung bei der Ermittlung der Raumtemperatur und der Fenster-Offen-Erkennung. Dadurch lässt sich insbesondere auch die Güte der Raumtemperaturregelung erhöhen.

### Bezugszeichenliste:

- 1: Vorrichtung
- 2: Heizkörper
- 3: Zulaufleitung
- 4: erster Temperaturfühler
- 5: zweiter Temperaturfühler
- 6: Rechenwerk mit Speicher
- 7: Heizkörperregler
- 8: Heizkörperventil

## Patentansprüche

1. Verfahren zur Regelung der Raumlufttemperatur, wobei ein erster Temperaturfühler (4) einen lokalen Wert für die Raumlufttemperatur und ein zweiter Temperaturfühler (5) die Vorlauftemperatur des Heizmediums an einem Heizkörper (2) erfasst, **dadurch gekennzeichnet, dass** die Raumlufttemperatur mittels eines Korrekturalgorithmus aus den von den beiden Temperaturfühlern (4, 5) gemessenen Temperaturmesswerten bestimmt wird.

2. Verfahren nach Anspruch 1, **dadurch gekennzeichnet, dass** aus dem Temperaturmesswert für die Vorlauftemperatur eine erste Korrekturgröße zur Berücksichtigung des Heizmediumtemperatureinflusses und eine zweite Korrekturgröße zur Berücksichtigung des Strahlungseinflusses des Heizkörpers (2) ermittelt werden, und dass die Raumlufttemperatur aus mindestens einem Temperaturmesswert für die lokale Raumlufttemperatur und der ersten und zweiten Korrekturgröße bestimmt wird.

3. Verfahren nach Anspruch 2, **dadurch gekennzeichnet, dass** die erste und/oder die zweite Korrekturgröße für eine bestimmte Vorlauftemperatur jeweils aus diskreten Einträgen einer Wertetabelle ermittelt wird (werden).

4. Verfahren nach Anspruch 3, **dadurch gekennzeichnet, dass** eine Korrekturgröße bspw. durch Interpolation aus mehreren Einträgen der Wertetabelle gemittelt wird.

5. Verfahren nach einem der Ansprüche 3 oder 4, **dadurch gekennzeichnet, dass** die jeweiligen Einträge der Wertetabelle von der Heizkörperkategorie, der Einbausituation des Heizkörpers (2), dem Heizkörpertyp, dem Temperaturfühlertyp, der Temperaturfühleranordnung oder dgl. abhängen.

6. Verfahren nach Anspruch 2, **dadurch gekennzeichnet, dass** die erste und/oder die zweite Korrekturgröße jeweils mit einer von der Vorlauftemperatur des Heizmediums abhängigen Parametrisierung ermittelt werden.

7. Verfahren nach Anspruch 6, **dadurch gekennzeichnet, dass** die Parametrisierung von der Heizkörperkategorie, der Einbausituation des Heizkörpers (2), dem Heizkörpertyp, dem Temperaturfühlertyp, der Temperaturfühleranordnung oder dgl. abhängt.

8. Verfahren nach einem der vorhergehenden Ansprüche, **dadurch gekennzeichnet, dass** zur Fenster-Offen-Erkennung in beheizbaren Räumen durch Auswertung des Raumtemperaturabfalls die zeitliche Änderung der Raumtemperatur überwacht wird, indem der Temperaturgradient und/oder kurzfristige Temperaturschwankungen mittels eines Algorithmus aus der in vorgegebenen zeitlichen Abständen ermittelten Raumtemperatur bestimmt werden, und dass die Empfindlichkeit des Algorithmus zur Fenster-Offen-Erkennung mit steigender Vorlauftemperatur des Heizmediums erhöht wird.

9. Verfahren nach Anspruch 8, **dadurch gekennzeichnet, dass** jeweils ein Schrankenwert für den Temperaturgradienten und/oder die Temperaturschwankungen vorgegeben wird, dessen Über- oder Unterschreiten festgestellt wird, und dass der Schrankenwert von der Höhe der Vorlauftemperatur abhängt.

10. Verfahren nach Anspruch 9, **dadurch gekennzeichnet, dass** der Schrankenwert von der Heizkörperkategorie, der Einbausituation des Heizkörpers (2), dem Heizkörpertyp, dem Temperaturfühlertyp, der Temperaturfühleranordnung oder dgl. abhängt.

11. Vorrichtung zur Durchführung des Verfahrens nach einem der Ansprüche 1 bis 10 mit mindestens zwei Temperaturfühlern (4, 5), wobei ein erster Temperaturfühler (4) zur lokalen Messung der Raumlufttemperatur und ein zweiter, insbesondere an der Zulaufleitung eines Heizkörpers (2) angeordneter Temperaturfühler (5) zur Messung der Vorlauftemperatur des Heizmediums ausgebildet ist, einem Analog-Digital-Wandler zur Digitalisierung der Temperaturmesswerte, einem Heizkörperregler (7) zur Steuerung von Heizkörperventilen (8) und einem Rechenwerk (6) mit Speicher zur Speicherung der digitalisierten Temperaturmesswerte und zur Durchführung von in dem Rechenwerk (6) implementierten Rechenvorschriften, **dadurch gekennzeichnet, dass** das Rechenwerk (6) die Raumlufttemperatur mittels eines Korrekturalgorithmus aus den von den beiden Temperaturfühlern (4, 5) gemessenen Temperaturmesswerten bestimmt.

12. Vorrichtung nach Anspruch 11, **dadurch gekennzeichnet, dass** das Rechenwerk (6) zur Fenster-Offen-Erkennung in beheizbaren Räumen durch Auswertung des Raumlufttemperaturabfalls die zeitliche Änderung der Raumlufttemperatur überwacht, indem der Temperaturgradient und/oder kurzfristige Temperaturschwankungen mittels eines Algorithmus aus der in vorgegebenen zeitlichen Abständen ermittelten Raumlufttemperatur bestimmt werden, und dass das Rechenwerk (6) die Empfindlichkeit des Algorithmus zur Fenster-Offen-Erkennung mit steigender Vorlauftemperatur des Heizmediums erhöht.

13. Vorrichtung nach Anspruch 11 oder 12, **dadurch gekennzeichnet, dass** die Vorrichtung (1) zur Übermittlung von Raumtemperaturwerten, Fenster-Offen-Kennungen oder dgl. mit einer zentralen Wohnungssteuerung, bspw. einer zentralen Raumtemperatur- oder Heizungsreglung, verbindbar ist.

## Claims

1. A method for controlling the room temperature, with a first temperature sensor (4) detecting a local room temperature value and a second temperature sensor (5) detecting the forward temperature of the heating medium supplied to a radiator (2), **characterized in that** the room temperature is determined, by means of a correction algorithm, from the temperature values measured by the two temperature sensors (4, 5).

2. A method according to claim 1, **characterized in that** a first correction value for taking into account the influence of the heating medium temperature, and a second correction value for considering the influence of the radiation of the radiator (2) is determined from the temperature value measured for the forward temperature, and that the room temperature is determined from at least one temperature value measured for the local room temperature and from the first and second correction values.

3. A method according to claim 2, **characterized in that** the first and/or the second correction value for a predetermined forward temperature is (are) respectively determined from discrete entries on a table of values.

4. A method according to claim 3, **characterized in that** a correction value is determined from the mean value, for example by interpolation, of a plurality of entries on the table of values.

5. A method according to any one of claims 3 or 4, **characterized in that** the given entries on the table of values are dependent on the radiator category, the mounting situation of the radiator (2), the type of radiator, the type of temperature sensor, the arrangement of the temperature sensor or the like.

6. A method according to claim 2, **characterized in that** the first and/or the second correction value is (are) respectively determined by a parametric representation dependent on the forward temperature of the heating medium.

7. A method according to claim 6, **characterized in that** the parametric representation is dependent on the radiator category, the mounting situation of the radiator (2), the radiator type, the type of the temperature sensor, the arrangement of the temperature sensor or the like.

8. A method according to any one of the preceding claims, **characterized in that** for the window-open detection in heatable rooms by evaluation of the temperature decrease, the time-related change of the room temperature is monitored **in that** the temperature gradient and/or short-term temperature fluctuations are determined, by an algorithm, from the room temperature detected at predetermined time intervals, and that the sensitivity of the algorithm toward the window-open detection is enhanced along with a rising forward temperature of the heating medium.

9. A method according to claim 8, **characterized in that** a threshold value for the temperature gradient and/or the temperature fluctuations, respectively, is defined, with such value exceeded or fallen below being detected, and that the threshold value is dependent on the level of the forward temperature.

10. A method according to claim 9, **characterized in that** the threshold value is dependent on the category of the radiator, the mounting situation of the radiator (2), the type of radiator, the type of the temperature sensor, and the arrangement of the temperature sensor or the like.

11. A device for carrying into effect the method according to any one of claims 1 through 10, comprising at least two temperature sensors (4, 5), with a first temperature sensor (4) being designed for locally measuring the room temperature, and a second temperature sensor (5) preferably arranged on the feed-in conduit of a radiator (2) being designed for measuring the forward temperature of the heating medium, further comprising an analog/digital transducer for digitalizing the measured temperature values, a radiator controller (7) for controlling radiator valves (8), and a calculator (6) having a memory for storing the digitalized temperature values measured and for carrying out prescribed calculating operations implemented within the calculator (6), **characterized in that** the calculator (6) determines the room temperature, by means of a correction algorithm, from the temperature values measured by the two temperature sensors (4, 5).

12. A device according to claim 11, **characterized in that** the calculator (6) for the window-open detection in heatable rooms by evaluation of the room temperature decrease monitors the time-related change of the room temperature **in that** the temperature gradient and/or short-term temperature fluctuations are determined, by means of an algorithm, from the room temperature measured at predetermined time intervals, and that the calculator (6) enhances the sensitivity of the algorithm toward the window-open detection along with a rising forward temperature of the heating medium.

13. A device according to claims 11 or 12, **characterized in that** the device (1) for communicating room temperature values and detected window-open data or the like can be connected to a central apartment control, for example, a central room temperature or heating controller.

## Revendications

1. Procédé pour réguler la température d'une pièce, comportant un palpeur de température (4) premier détectant une valeur locale pour la température de pièce et un palpeur de température (5) secondaire détectant la température d'aller du milieu à brûler alimenté à un radiateur (2), **caractérisé en ce que** la température de pièce est déterminée des valeurs de température mesurées par les deux palpeurs de température (4, 5) par l'intermédiaire d'un algorithme de correction.

2. Procédé selon la revendication 1, **caractérisé en ce qu'**une valeur de correction première pour tenir compte de l'influence de la température du milieu à brûler et une valeur de correction secondaire pour tenir compte de l'influence de la radiation du radiateur (2) sont déterminées de la valeur de température mesurée pour la température d'aller, et que la température de pièce est déterminée au moins d'une valeur de température mesurée pour la température de pièce locale, et de la valeur de correction première et secondaire.

3. Procédé selon la revendication 2, **caractérisé en ce que** la valeur de correction première et/ou la valeur de correction secondaire sont déterminées pour une certaine température d'aller des données discrètes d'un tableau de valeurs.

4. Procédé selon la revendication 3, **caractérisé en ce que** la valeur moyenne d'une valeur de correction est calculée des plusieurs données du tableau de valeurs, par exemple, par l'interpolation.

5. Procédé selon l'une des revendications 3 ou 4, **caractérisé en ce que** chacune des données du tableau de valeurs est dépendante de la catégorie du radiateur, de la situation de montage du radiateur (2), du type de radiateur, du type de palpeur de température, de l'arrangement des palpeurs de température etc.

6. Procédé selon la revendication 2, **caractérisé en ce que** la valeur de correction première et/ou la valeur de correction secondaire sont déterminées par l'intermédiaire d'une représentation paramétrique dépendante de la température d'aller du milieu à brûler.

7. Procédé selon la revendication 6, **caractérisé en ce que** la représentation paramétrique est dépendante de la catégorie du radiateur, de la situation de montage du radiateur (2), du type de radiateur, du type de palpeur de température, de l'arrangement du palpeur de température etc.

8. Procédé selon l'une des revendications précédentes, **caractérisé en ce que** pour la détection fenêtre-ouverte dans des pièces chauffables par l'évaluation de la chute de température, le change à temps défini de la température de pièce est surveillé en déterminant le gradient de température et/ou des fluctuations de température à court terme, par l'intermédiaire d'un algorithme, de la température de pièce mesurée aux intervalles de temps définis et que la sensibilité de l'algorithme vis-à-vis la détection fenêtre-ouverte est augmentée selon la température d'aller du milieu à brûler croissante.

9. Procédé selon la revendication 8, **caractérisé en ce qu'**une valeur seuil pour le gradient de température et/ou des fluctuations de température est définie, le dépassement de laquelle vers le bas ou vers le haut étant détecté, et que ladite valeur seuil est dépendante du niveau de la température d'aller.

10. Procédé selon la revendication 9, **caractérisé en ce que** la valeur seuil est dépendante de la catégorie du radiateur, de la situation de montage du radiateur (2), du type de radiateur, du type de palpeur de température, de l'arrangement du palpeur de température etc.

11. Dispositif pour la mise en oeuvre le procédé selon l'une des revendications 1 à 10 comportant au moins deux palpeurs de température (4, 5), le palpeur de température (4) premier étant formé pour mesurer localement la température de pièce, et un palpeur de température (5) secondaire préférablement prévu à la conduite d'entrée d'un radiateur (2) étant formé pour mesurer la température d'aller du milieu à brûler, un transformateur analog/digital pour digitaliser les valeurs de température mesurées, un régulateur de radiateur (7) pour commander des soupapes de radiateur (8) et un calculateur (6) prévu d'une mémoire pour stocker des valeurs de température digitalisées et pour mise en oeuvre des opérations calculatrices implémentées dans le calculateur (6), **caractérisé en ce que** le calculateur (6) détermine la température de pièce, par l'intermédiaire d'un algorithme de correction, des valeurs de température mesurées par les deux palpeurs (4, 5).

12. Dispositif selon la revendication 11, **caractérisé en ce que** le calculateur (6) pour la détection fenêtre-ouverte dans des pièces chauffables par l'évaluation de la chute de température, surveille le change à temps de la température de pièce en déterminant le gradient de température et/ou des fluctuations de température à court terme par l'intermédiaire d'un algorithme, de la température de pièce mesurée aux intervalles à temps définis et que la sensibilité de l'algorithme vis-à-vis la détection fenêtre-ouverte est augmentée selon la température d'aller du milieu à brûler croissante.

13. Dispositif selon les revendications 11 ou 12, **caractérisé en ce que** le dispositif (1) pour transmettre des valeurs de température de pièce et des données sur la détection fenêtre-ouverte etc. est reliable à une commande centrale d'appartement, par exemple un régulateur de température de pièce ou de chauffage.
